# EUROPEAN PATENT APPLICATION

(11) **EP 4 822 760 A2**
(43) Date of publication of application: **14.10.2026**
(21) Application number: 26171087.5
(22) Date of filing: 08.04.2026
(51) Int. Cl.: H01M 4/133, H01M 4/36, H01M 4/38, H01M 4/587, H01M 4/62

(54) **ANODE FOR LITHIUM SECONDARY BATTERY AND LITHIUM SECONDARY BATTERY INCLUDING SAME**

(30) Priority: 08.04.2025 KR 20250045198
(71) Applicant: SK On Co., Ltd., Seoul 03161 (KR); SK Innovation Co., Ltd., Seoul 03188 (KR)
(72) Inventor: PARK, Sang Won, 34124 Daejeon (KR); KWON, Seong Cho, 34124 Daejeon (KR); YU, Do Ae, 34124 Daejeon (KR); JANG, Hwan Ho, 34124 Daejeon (KR); CHOI, Wan Uk, 34124 Daejeon (KR); CHOI, Je Nam, 34124 Daejeon (KR); HAN, Jun Hee, 34124 Daejeon (KR); HEO, Pil Won, 34124 Daejeon (KR)
(74) Representative: Prüfer & Partner mbB Patentanwälte · Rechtsanwälte

(57) **Abstract**

An anode for a lithium secondary battery includes an anode current collector; and an anode mixture layer on at least one surface of the anode current collector, wherein the anode mixture layer includes a carbon-based active material, and wherein the anode mixture layer has a peak intensity ratio of 1.85 to 3.5 according to Equation 1 below, [Equation 1] $Peak intensity ratio = {I}_{2 H \left(100\right)} / {I}_{3 R \left(101\right)} ,$ wherein in Equation 1, I_{2H(100)} is a peak intensity value of the 2H(100) plane in an X-ray diffraction pattern obtained by an XRD analysis, and I_{3R(101)} is a peak intensity value of the 3R(101) plane in the X-ray diffraction pattern obtained by the XRD analysis.

## Description

### TECHNICAL FIELD

The embodiments of the present disclosure generally relate to an anode for a lithium secondary battery and a lithium secondary battery including the same.

### BACKGROUND

Due to active research into electric vehicles (EVs) as an alternative to fossil fuel-based vehicles such as gasoline vehicles, diesel vehicles, etc., which are one of the main causes of air pollution, a lithium secondary battery having high discharge voltage and output stability is mainly used as a power source for electric vehicles (EVs). Accordingly, research into and development of technologies capable of manufacturing high-performance lithium secondary batteries have been actively conducted. According to an embodiment of the present disclosure, charge and discharge characteristics of a lithium secondary battery, an energy density of a lithium secondary battery, and a cycle life performance of a lithium secondary battery may be improved.

### SUMMARY

Some embodiments of the present disclosure provide an anode for a lithium secondary battery having excellent charge and discharge characteristics.

Some embodiments of the present disclosure provide an anode for a lithium secondary battery having high energy density.

Some embodiments of the present disclosure provide an anode for a lithium secondary battery having excellent lifespan performance.

In some embodiments of the present disclosure, the anode for a lithium secondary battery includes an anode current collector; and an anode mixture layer on at least one surface of the anode current collector, wherein the anode mixture layer includes a carbon-based active material, and wherein the anode mixture layer has a peak intensity ratio of 1.85 to 3.5 according to Equation 1 below.

[Equation 1] $Peak intensity ratio = {I}_{2 H \left(100\right)} / {I}_{3 R \left(101\right)} .$

In Equation 1, I_{2H(100)} is a peak intensity value of the 2H(100) plane in an X-ray diffraction pattern obtained by an XRD analysis, and I_{3R(101)} is a peak intensity value of the 3R(101) plane in the X-ray diffraction pattern obtained by the XRD analysis.

In some embodiments of the present disclosure, the anode mixture layer may include a first anode mixture layer on an anode current collector and a second anode mixture layer on the first anode mixture layer, wherein the first anode mixture layer may include a first carbon-based active material, and the second anode mixture layer may include a second carbon-based active material.

In some embodiments of the present disclosure, the first carbon-based active material may include at least one of artificial graphite and natural graphite.

In some embodiments of the present disclosure, the content of natural graphite in the first anode mixture layer may be less than 60 wt% based on the total weight of the first anode mixture layer.

In some embodiments of the present disclosure, the second carbon-based active material may include artificial graphite.

In some embodiments of the present disclosure, the weight% of the first carbon-based active material included in the first anode mixture layer based on the total weight of the first anode mixture layer may be equal to or greater than the weight% of the second carbon-based active material included in the second anode mixture layer based on the total weight of the second anode mixture layer.

In some embodiments of the present disclosure, the content of the first carbon-based active material in the first anode mixture layer may be 94 to 99 wt%.

In some embodiments of the present disclosure, the content of the second carbon-based active material included in the second anode mixture layer may be 82 to 97 wt%.

In some embodiments of the present disclosure, the second anode mixture layer may further include a silicon-based active material.

In some embodiments of the present disclosure, the first anode mixture layer and the second anode mixture layer may each further include a binder, wherein the weight% of the binder included in the first anode mixture layer based on the total weight of the first anode mixture layer may be equal to or greater than the weight% of the binder included in the second anode mixture layer based on the total weight of the second anode mixture layer.

In some embodiments of the present disclosure, the first anode mixture layer may not include a conductive material, and the second anode mixture layer may further include a conductive material.

In some embodiments of the present disclosure, the rolled density of the anode for a lithium secondary battery may be less than 1.64 g/cc.

The lithium secondary battery according to an embodiment includes the anode for a lithium secondary battery according to any of the above-described embodiments.

According to an embodiment of the present disclosure, charge and discharge characteristics of a lithium secondary battery may be improved.

According to another embodiment of the present disclosure, an energy density of a lithium secondary battery may be improved.

According to another embodiment of the present disclosure, a cycle life performance of a lithium secondary battery may be improved.

The anode for a lithium secondary battery according to an embodiment comprises an anode current collector; a first anode mixture layer disposed on the anode current collector and comprising a first carbon-based active material; a second anode mixture layer disposed on the first anode mixture layer and comprising a second carbon-based active material; wherein the second anode mixture layer comprises a conductive material and the first anode mixture layer does not comprise a conductive material.

### BRIEF DESCRIPTION OF THE DRAWINGS

FIG. 1 is a schematic cross-sectional view of the structure of an anode for a lithium secondary battery according to an embodiment of the present disclosure.
FIG. 2 is a graph showing rapid life performance evaluation results of the lithium secondary batteries of Examples and Comparative Examples.
FIG. 3 is a graph showing the results of evaluating the life performance at 45° C of lithium secondary batteries of Examples and Comparative Examples.

### DETAILED DESCRIPTION

Some embodiments provide the anode 100 for a lithium secondary battery which includes an anode current collector 10; and an anode mixture layer 20 on at least one surface of the anode current collector, wherein the anode mixture layer 20 includes a carbon-based active material, and wherein the anode mixture layer has a peak intensity ratio of 1.85 to 3.5 according to Equation 1 below.

[Equation 1] $Peak intensity ratio = {I}_{2 H \left(100\right)} / {I}_{3 R \left(101\right)} .$

In Equation 1, I_{2H(100)} is a peak intensity value of the 2H(100) plane in an X-ray diffraction pattern obtained by an XRD analysis, and I_{3R(101)} is a peak intensity value of the 3R(101) plane in the X-ray diffraction pattern obtained by the XRD analysis.

The lithium secondary battery may have different performance depending on the type of anode active material contained therein. Specifically, in a driving process of the lithium secondary battery, carbon-based active materials such as graphite may be degraded to different degrees according to types thereof due to structural change. In this regard, the present embodiment may provide an anode and a lithium secondary battery including the same having excellent performance by controlling a specific peak intensity ratio based on an XRD analysis with respect to the anode mixture layer 20 containing a carbon-based active material. Hereinafter, an anode for a lithium secondary battery according to the present embodiment will be described in more detail.

The anode 100 for the lithium secondary battery includes an anode current collector 10 and an anode mixture layer 20 on at least one surface of the anode current collector. The components of the anode current collector 10 are not particularly limited. For example, the anode current collector may be a plate or foil made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. In some embodiments, the anode current collector may be a copper foil (Cu-foil).

The thickness of the anode current collector 10 is not particularly limited. For example, the thickness of the anode current collector may be in a range from 0.1 µm to 50 µm.

The anode mixture layer 20 is a layer including an anode active material, and the anode mixture layer 20 may include a carbon-based active material having a peak intensity ratio of 1.85 to 3.5 according to Equation 1 as the anode active material. Specifically, the carbon-based active material may have a peak intensity ratio according to Equation 1, of 1.9 or more, 2.3 or more, or 2.6 or more, and 3.2 or less.

The peak intensity ratio according to Equation 1 means a ratio of the peak intensity value of the 2H(100) plane to the peak intensity value of the 3R(101) plane in an X-ray diffraction (XRD) pattern when performing an XRD analysis for the anode mixture layer 20 using CuKα rays. The peak intensity value may mean a height value or an integral area value of the peak, and according to an embodiment, I_{2H(100)} and I_{3R(101)} in Equation 1 may be calculated as integral area values of the peaks. Herein, the peak intensity values and their ratio may be values measured and calculated by performing the XRD analysis under the following analytical conditions.
- 2θ: 10°~ 80°
- Step size: 0.006565 °/step
- Time per step: 100 sec.
- Scan rate = 0.0673 °/sec

The peak intensity ratio according to Equation 1 may be measured for a powder form of the anode mixture layer obtained by pulverizing the anode mixture layer 20 after peeling it from the anode current collector 10. Herein, pulverization of the anode mixture layer 20 may be performed to minimize breakage of the anode active material and to randomize orientation of the carbon-based active material. For example, the anode mixture layer 20 may be pulverized using a pulverizing stick and then obtained in powder form having particles with a diameter of 10 to 20 µm through particle separation, and the peak intensity ratio may be measured for the anode mixture layer in powder form by the same method described above. Herein, the diameter may refer to the length of the longest axis of the particles of the powder form of the anode mixture layer.

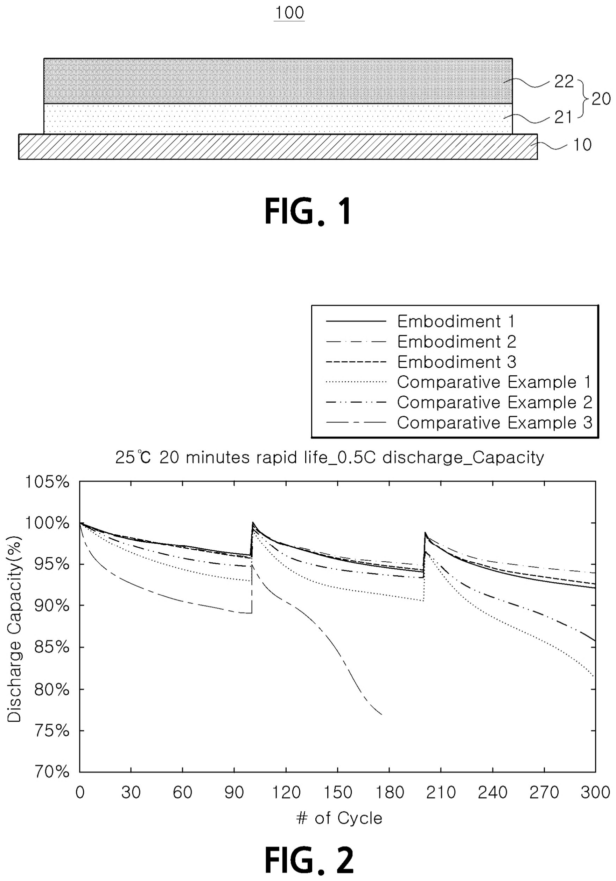

In some embodiments, the anode for a lithium secondary battery may have a multilayer structure (see FIG. 1). Specifically, the anode mixture layer 20 may include a first anode mixture layer 21 on the anode current collector 10 and a second anode mixture layer 22 on the first anode mixture layer. The first anode mixture layer 21 which is adjacent to the anode current collector 10 in the anode mixture layer 20 may contain a first carbon-based active material, and the second anode mixture layer 22 which is spaced apart from the anode current collector in the anode mixture layer may contain a second carbon-based active material. The first carbon-based active material and the second carbon-based active material may be different from each other or identical to each other.

In the above embodiment, a peak intensity ratio according to Equation 1 of the anode mixture layer 20 may be measured for a form (or state) in which the first anode mixture layer 21 and the second anode mixture layer 22 are mixed. Specifically, after peeling off the anode mixture layer 20 including the first anode mixture layer 21 and the second anode mixture layer 22 from the anode current collector 10, and then pulverized to measure a peak intensity ratio for the anode mixture layer in the form of powder.

The pulverization of the anode mixture layer 20, which includes the first anode mixture layer 21 and the second anode mixture layer 22, may be performed to minimize breakage of the anode active material and to render the orientation of the carbon-based active material random. For example, the anode mixture layer 20 may be pulverized using a pulverizing stick and then obtained in a powder form having a diameter of 10 to 20 µm through particle separation, and the peak intensity ratio may be measured for the anode mixture layer in powder form by the same method described above. Herein, the diameter may refer to the length of the longest axis of the powder form of the anode mixture layer.

In some embodiments, the peak intensity ratio value of Equation 1 for the second anode mixture layer 22 may be equal to or greater than the peak intensity ratio value of Equation 1 of the first anode mixture layer 21. Specifically, in the anode 100 for a lithium secondary battery, the second anode mixture layer 22 located on top may have a higher peak intensity ratio value than the first anode mixture layer 21 located at the bottom.

According to an embodiment of the present disclosure, a peak intensity ratio of each of the first anode mixture layer 21 and the second anode mixture layer 22 may be measured for each powder form of the first anode mixture layer and the second anode mixture layer formed by pulverizing each layer that has been peeled from the anode current collector 10, and the pulverizing and the method for measuring the peak intensity ratio may be performed as described above.

According to another embodiment, the peak intensity ratio of each of the first anode mixture layer 21 and the second anode mixture layer 22 may be measured in a state in which each mixture layer is disposed on the anode current collector 10. Specifically, the peak intensity ratio of the first anode mixture layer 21 may be measured by performing an XRD analysis after disposing the first anode mixture layer on the anode current collector 10, and the peak intensity ratio of the second anode mixture layer 22 may be measured by performing an XRD analysis after disposing the second anode mixture layer on the anode current collector 10. Herein, the XRD analysis method and conditions may be set as described above.

In some embodiments, the first anode mixture layer 21 may have a peak intensity ratio according to Equation 1 of 2.5 to 3.3. Specifically, the first anode mixture layer may have a peak intensity ratio according to Equation 1 of 2.7 or more to 3.1 or less.

In some embodiments, the second anode mixture layer 22 may have a peak intensity ratio of 2.7 to 3.5 according to Equation 1. Specifically, the second anode mixture layer may have a peak intensity ratio of 2.9 or more to 3.3 or less according to Equation 1.

In some embodiments, the first carbon-based active material may have a ratio of peak intensity of (004) plane to peak intensity of (110) plane (I₍₀₀₄₎/I₍₁₁₀₎) derived from an X-ray diffraction (XRD) analysis equal to or lower than that of the second carbon-based active material.

Specifically, the first carbon-based active material may have a ratio of peak intensity of the (004) plane to peak intensity of the (110) plane derived from an X-ray diffraction (XRD) analysis (I₍₀₀₄₎/I₍₁₁₀₎) in the range of 1 to 10. More specifically, the value of I₍₀₀₄₎/I₍₁₁₀₎ of the first carbon-based active material may be 1.5 or more, 2 or more, or 3 or more, and may be 8 or less, 6 or less, or 4 or less.

Specifically, the second carbon-based active material may have a ratio of peak intensity of the (004) plane to that of the (110) plane derived from an X-ray diffraction (XRD) analysis (I₍₀₀₄₎/I₍₁₁₀₎) in a range of 2 to 15. More specifically, the value of I₍₀₀₄₎/I₍₁₁₀₎ of the second carbon-based active material may be 2.5 or more, 3 or more, or 4 or more, and may be 10 or less, 7 or less, or 5 or less.

The peak intensity of each of the (004) and the (110) planes may be calculated as an integral area value of each peak of the (004) plane and the (110) plane in an X-ray diffraction (XRD) pattern when using CuKα rays to perform an XRD analysis. Herein, the peak intensity values and their ratio values may be measured and calculated by performing the XRD analysis under the following analytical conditions.
- 2θ: 10°~ 80°
- Step size: 0.006565 °/step
- Time per step: 100 sec
- Scan rate = 0.0673 °/sec

In some embodiments, the first carbon-based active material may include at least one of artificial graphite and natural graphite. Specifically, in an embodiment, the first anode mixture layer may include two types of artificial graphite and natural graphite as the first carbon-based active material. In another embodiment, the first anode mixture layer may include only artificial graphite as the first carbon-based active material.

In some embodiments, the content of natural graphite in the first anode mixture layer 21 may be less than 60 wt% based on the total weight of the first anode mixture layer. Specifically, when the first anode mixture layer includes two types, artificial graphite and natural graphite, as a first carbon-based active material, the content of natural graphite in the first anode mixture layer may be greater than 0 wt% and less than 60 wt% based on the total weight of the first anode mixture layer 21. In addition, when the first anode mixture layer includes only artificial graphite as a first carbon-based active material, the content of natural graphite in the first anode mixture layer may be 0 wt%.

When the content of natural graphite in the first anode mixture layer 21 is less than 60 wt% based on the total weight of the first anode mixture layer, natural graphite, which has relatively low strength, is relatively less distributed in a portion of the anode mixture layer 20 adjacent to the anode current collector 10, thereby improving the durability of the anode and enhancing the life performance of a lithium secondary battery including the same.

In some embodiments, the second carbon-based active material may include artificial graphite. Specifically, in an embodiment, the second anode mixture layer may include only artificial graphite as a second carbon-based active material.

The artificial graphite may have an average particle diameter (D50) of 10 to 20 µm. Specifically, the artificial graphite may have an average particle diameter (D50) of 12 µm or more, or 14 µm or more, and 18 µm or less, or 16 µm or less.

The natural graphite may have an average particle diameter (D50) of 6 to 16 µm. Specifically, the natural graphite may have an average particle diameter (D50) of 9 µm or more, or 11 µm or more, and 15 µm or less, or 13 µm or less.

The average particle diameter (D50) is not particularly limited. For example, the average particle diameter (D50) may be a value of a particle diameter at which a cumulative volume fraction reaches 50% when particles are cumulated in order from smallest to largest using a particle size analyzer based on laser diffraction method (such as MT 3000 manufactured by MICROTRAC).

The artificial graphite may have a BET specific surface area of 0.5 to 3.5 m²/g. Specifically, the BET specific surface area of the artificial graphite may be 1 m²/g or more to 3 m²/g or less.

The natural graphite may have a BET specific surface area of 1.5 to 4.5 m²/g . Specifically, the natural graphite may have a BET specific surface area of 2 m²/g or more to 4 m²/g or less.

The method for measuring the BET specific surface area is not particularly limited. For example, the BET specific surface area may be derived from the amount of nitrogen gas adsorbed by particles measured according to ISO-9277 using a gas adsorption analyzer (such as Micromeritics TriStarr II) under a nitrogen atmosphere.

The tap density of the artificial graphite may be in a range from 0.5 to 3 g/cc. Specifically, the tap density of the artificial graphite may be 1 g/cc or more, or 1.4 g/cc or more, and may be 2 g/cc or less, or 1.6 g/cc or less.

The tap density of the natural graphite may be in a range from 0.5 to 3 g/cc. Specifically, the tap density of the natural graphite may be 1 g/cc or more, or 1.4 g/cc or more, and may be 2 g/cc or less, or 1.6 g/cc or less.

The method for measuring the tap density is not particularly limited. For example, the tap density may be an average value of three times measured by a method in which a cylinder containing 50.0 g of sample is tapped 3,000 times with a tap densitometer such as Tap Denser KYT-5000 (manufactured by SHI SHIN Co., Ltd.) and then reading a scale value.

In some embodiments, the content (by weight) of the first carbon-based active material included in the first anode mixture layer may be equal to or greater than the content (by weight) of the second carbon-based active material included in the second anode mixture layer. Specifically, the weight% of the first carbon-based active material included in the first anode mixture layer based on the total weight of the first anode mixture layer 21 may be equal to or greater than the weight% of the second carbon-based active material included in the second anode mixture layer based on the total weight of the second anode mixture layer 22. In this case, even if the lower located first anode mixture layer 21 does not further include silicon-based active materials as an anode active material, it is possible to improve the capacity of the lithium secondary battery.

In some embodiments, the content of the first carbon-based active material in the first anode mixture layer 21 may be 94 to 99 wt%. Specifically, the content of the first carbon-based active material in the first anode mixture layer 21 may be 95 wt% or more to 97 wt% or less.

In some embodiments, the content of the second carbon-based active material included in the second anode mixture layer 22 may be 82 to 97 wt%. Specifically, the content of the second carbon-based active material in the second anode mixture layer 22 may be 83 wt% or more to 93 wt% or less, or 86 wt% or less.

In some embodiments, the content (by weight) of the first carbon-based active material may be equal to or greater than the content (by weight) of the second carbon-based active material based on the entire anode mixture layer 20. Specifically, based on the total weight of the entire anode mixture layer 20, the content of the first carbon-based active material may be in a range from 40 wt% to 45 wt%, and the content of the second carbon-based active material may be in a range from 45 wt% to 50 wt%.

In some embodiments, the second anode mixture layer 22 may further include a silicon-based active material. Specifically, in the anode 100 for lithium secondary batteries according to an embodiment, the first anode mixture layer 21 includes only the first carbon-based active material as the anode active material and the second anode mixture layer 22 includes the second carbon-based active material and the silicon-based active material as the anode active materials.

The silicon-based active material may contain silicon but is not particularly limited thereto, and may be an active material that can alloy with lithium (Li). For example, the silicon-based active material may include one or more selected from the group consisting of silicon (Si), silicon oxide (SiOx, 0<x<2), metal-doped silicon oxide (SiOx, 0<x<2), carbon-coated silicon oxide (SiOx, 0<x<2), a silicon-carbon composite (Si-C), and a silicon alloy.

Although the silicon-based active material has a higher capacity than carbon-based active materials, it may cause delamination of the anode mixture layer from the anode current collector due to relatively large volume expansion and contraction during charge and discharge processes of the battery. Therefore, when the first anode mixture layer 21, which is a lower layer adjacent to the anode current collector 10, does not include a silicon-based active material and the upper second anode mixture layer 22 positioned above the first anode mixture layer 21 includes a silicon-based active material, it is possible to secure the high-capacity characteristics of the anode while suppressing anode delamination.

In some embodiments, the content of the silicon-based active material in the second anode mixture layer 22 may be from 1 to 50 wt%. Specifically, the content of the silicon-based active material in the second anode mixture layer 22 may be at least 5 wt%, or at least 10 wt%, and may be not more than 40 wt%, or not more than 30 wt%, or not more than 20 wt%.

In some embodiments, the content of silicon-based active material may be 1 wt% or more, or 5 wt% or more, and 20 wt% or less, or 10 wt% or less, based on the entire anode mixture layer 20.

In some embodiments, the first anode mixture layer 21 and the second anode mixture layer 22 may each further include a binder. The binder is not particularly limited, and may include, for example, a rubber-based binder such as styrene-butadiene rubber (SBR), fluorine-based rubber, ethylene propylene rubber, butadiene rubber, isoprene rubber, or silane-based rubber. According to an embodiment, the binder may include styrene-butadiene rubber (SBR).

In some embodiments, the weight% of the binder included in the first anode mixture layer based on the total weight of the first anode mixture layer 21 may be equal to or greater than the weight% of the binder included in the second anode mixture layer based on the total weight of the second anode mixture layer 22.

Specifically, the content of the binder included in the first anode mixture layer may be 0.5 wt% or more, 1 wt% or more, or 2 wt% or more, and may be 5 wt% or less, or 3 wt% or less. In addition, the content of the binder included in the second anode mixture layer may be 0.1 wt% or more, 0.3 wt% or more, or 0.5 wt% or more, and may be 3 wt% or less, or 1 wt% or less. In this case, since the binder is distributed in a relatively large amount in the first anode mixture layer which is a lower layer adjacent to the anode current collector, adhesion between the anode current collector and the anode mixture layer can be secured effectively. That is, excellent adhesion can be achieved.

In some embodiments, the content of the binder may be 1 wt% or more, or 1.3 wt% or more, and 3 wt% or less, or 1.7 wt% or less, based on the entire anode mixture layer 20.

In some embodiments, the first anode mixture layer 21 and the second anode mixture layer 22 may each further include a thickener. The thickener is not particularly limited. For example, the thickener may include a cellulose-based thickener such as carboxymethylcellulose (CMC), hydroxypropylmethylcellulose, methylcellulose, or an alkali metal salt thereof. According to an embodiment, the thickener may include carboxymethylcellulose (CMC).

In some embodiments, the content of the thickener included in each of the first and second anode mixture layers may be at least 0.3 wt%, at least 0.5 wt% or at least 1 wt%, and may be at most 4 wt% or at most 2 wt%.

In some embodiments, the content of the thickener may be 0.7 wt% or more, or 1 wt% or more, and 2.5 wt% or less, or 1.4 wt% or less, based on the entire anode mixture layer 20.

In some embodiments, the weight% of the binder included in the first anode mixture layer may be equal to or greater than the weight% of the thickener included in the first anode mixture layer based on the total weight of the first anode mixture layer 21, and the weight% of the binder included in the second anode mixture layer may be less than or equal to the weight% of the thickener included in the second anode mixture layer based on the total weight of the second anode mixture layer 22.

Specifically, the weight ratio of binder to thickener included in the first anode mixture layer 21 may be 1:1 to 3:1, and the weight ratio of binder to thickener included in the second anode mixture layer 22 may be 1:1 to 1:3.

In some embodiments, the content (by weight) of the binder may be equal to or greater than the content of the thickener (by weight) based on the entire anode mixture layer 20. Specifically, a weight ratio of the binder and the thickener may range from 1:1 to 1.5:1 based on the entire anode mixture layer 20.

The anode mixture layer may further include a conductive material. The type of conductive material is not particularly limited. For example, the conductive material may be one or more selected from among particulate carbon materials and fibrous carbon materials. The particulate carbon material may be carbon black such as Super-P and Super-C, acetylene black, ketjen black, etc., and the fibrous carbon material may be carbon fiber, carbon nanotube (CNT), vapor grown carbon fiber (VGCF), etc.

In some embodiments, the content of the conductive material may be 0.01 wt% or more to 1 wt% or less, or 0.05 wt% or less based on the entire anode mixture layer 20.

The anode mixture layer may further include a conductive material dispersant. The conductive material dispersant may be a dispersion medium added during the preparation of a predispersion solution of a conductive material to be added to a slurry for preparing the anode mixture layer. For example, the conductive material dispersant may be at least one selected from the group consisting of water-based solvents (water, pure water, deionized water, distilled water, aqueous hydrochloric acid solution, aqueous sodium hydroxide solution, etc.), alcohol-based solvents (ethanol, isopropanol, methanol, acetone, n-propanol, t-butanol, etc.), and non-aqueous solvents (N-methyl-2-pyrrolidone (NMP), dimethylformamide, dimethylacetamide, N,N-dimethylaminopropylamine, ethylene oxide, tetrahydrofuran, etc.).

In some embodiments, the content of the conductive material dispersant may be 0.02 wt% or more to 1.5 wt% or less, or 0.07 wt% or less based on the entire anode mixture layer 20.

In some embodiments, the first anode mixture layer 21 may not include a conductive material, and the second anode mixture layer 22 may further include a conductive material. In this case, the first anode mixture layer 21 may also not include a conductive material dispersant and the second anode mixture layer 22 may further include a conductive material dispersant.

As described above, when the first anode mixture layer 21 which is a lower layer adjacent to the anode current collector 10 does not include the conductive material and only the second anode mixture layer 22 which is an upper layer includes the conductive material, it is possible to secure conductivity improvement through addition of the conductive material while reducing total amount of added conductive material for economic efficiency.

In some embodiments, the content of the conductive material in the second anode mixture layer may be 0.02 wt% or more, or 0.04 wt% or more, and 2 wt% or less, or 0.1 wt% or less. In addition, the content of the conductive material dispersant in the second anode mixture layer may be 0.04 wt% or more, and 3 wt% or less, or 1.4 wt% or less.

In some embodiments, the ratio of the total weight of silicon-based active material to the total weight of conductive material in the anode mixture layer 20 may be 150 or more. When the ratio of the total weight of silicon-based active material to the total weight of conductive material included in the anode mixture layer 20 is 150 or more, it is possible to control the content of silicon-based active material relative to that of conductive material at a high level and thus improve the performance of lithium secondary batteries.

Specifically, the ratio of the total weight of silicon-based active material to the total weight of conductive material in the anode mixture layer 20 may be 170 or more, or 190 or more, and may be 500 or less, 300 or less, or 210 or less.

In some embodiments, the total loading weight (LW) of the anode mixture layer 20 may be from 5 to 20 mg/cm². Specifically, the total loading weight (LW) of the anode mixture layer 20 may be greater than or equal to 10 mg/cm² and less than or equal to 15 mg/cm².

In some embodiments, the ratio of loading weight (LW) between the first anode mixture layer 21 and the second anode mixture layer 22 may be in a range from 30:70 to 70:30. Specifically, the ratio of loading weight (LW) between the first anode mixture layer 21 and the second anode mixture layer 22 may be in a range from 40:60 to 60:40 or from 45:55 to 55:45.

In some embodiments, the rolled density of the anode for a lithium secondary battery may be less than 1.64 g/cc. Specifically, the rolled density of the anode for a lithium secondary battery may be 1 g/cc or more, or 1.5 g/cc or more, and may be 1.63 g/cc or less.

In some embodiments, the anode for a lithium secondary battery comprises an anode current collector; a first anode mixture layer disposed on the anode current collector and comprising a first carbon-based active material; a second anode mixture layer disposed on the first anode mixture layer and comprising a second carbon-based active material; wherein the second anode mixture layer comprises a conductive material and the first anode mixture layer does not comprise a conductive material.

The method for manufacturing the anode 100 for a lithium secondary battery is not particularly limited. For example, the anode 100 for a lithium secondary battery may be prepared by a method such as (1) a 'two-step coating' process of sequentially applying upper and lower layer slurries or (2) a 'simultaneous coating' process of simultaneously applying upper and lower layer slurries.

The anode 100 may be prepared by the 'two-step coating' process which includes applying a first solvent and a first anode slurry including the first carbon-based active material to the anode current collector 10 by a method such as bar coating, casting, or spraying, and drying at about 70° C to about 100° C to form a first anode mixture layer 21, and then applying a second anode slurry including the second carbon-based active material to the first anode mixture layer 21 by a method such as bar coating, casting, or spraying, and drying at about 70° C to about 100°C.

The solvent may include dimethyl sulfoxide (DMSO), isopropyl alcohol, N-methyl-2-pyrrolidone (NMP), acetone or water, and the amount of the solvent used in the composition for forming the anode mixture layer should be sufficient, taking into account the coating thickness and manufacturing yield of the composition, to dissolve or disperse the active material, conductive material and binder and to provide a viscosity that can exhibit excellent thickness uniformity when applied to form the anode mixture layer.

### Lithium secondary battery

The lithium secondary battery according to an embodiment includes the anode for a lithium secondary battery according to any of the above-described embodiments. For example, the lithium secondary battery may include a cathode, an anode and a separator interposed between the cathode and the anode. The anode may be an anode for a secondary battery according to any of the above-described embodiments.

The cathode may include a cathode current collector and a cathode mixture layer disposed on at least one surface of the cathode current collector. The cathode current collector may include stainless steel, nickel, aluminum, titanium, or an alloy thereof. The cathode current collector may also include carbon, nickel, titanium, silver-treated aluminum, or stainless steel. The cathode current collector may be, for example, 10 to 50 µm thick, but is not limited thereto.

The cathode mixture layer may include a cathode active material. The cathode active material may include a compound capable of reversibly intercalating and deintercalating lithium ions.

According to some embodiments, the cathode active material may include a lithium-nickel metal oxide. The lithium-nickel metal oxide may further include at least one of cobalt (Co), manganese (Mn), and aluminum (Al).

In some embodiments, the cathode active material or lithium-nickel metal oxide may include a layered structure or crystal structure represented by Chemical Formula 1 below.

Chemical Formula 1 LiₓNiₐM_{b}O_{2+z}

In Chemical Formula 1, x may be in a range of 0.9 to 1.2, a may be in a range of 0.6 to 0.99, b may be in a range of 0.01 to 0.4, and z may be in a range of -0.5 to 0.1. As described above, M may include Co, Mn, and/or Al.

The chemical structure indicated as Chemical Formula 1 represents a bonding relationship included in the layered or crystal structure of the cathode active material and does not exclude other additional elements. For example, M may include Co and/or Mn, and Co and/or Mn together with Ni may be provided as main active elements of the cathode active material. Chemical Formula 1 is provided to express the bonding relationship of the main active elements and should be understood to encompass the introduction and substitution of additional elements.

In an embodiment, auxiliary elements may be further added to the main active element in order to improve chemical stability of the cathode active material or the layered structure/crystal structure. The auxiliary elements can form bonds by being incorporated together into the layered structure/crystal structure, and such case is also understood as being included within the scope of Chemical Formula 1.

The auxiliary element may include at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary element may act as an auxiliary active element that contributes to the capacity/output activity of the cathode active material, such as Al together with Co or Mn.

For example, the cathode active material or the lithium-nickel metal oxide may include a layered structure or crystal structure represented by Chemical Formula 1-1 below.

Chemical Formula 1-1 LiₓNiₐM1_{b1}M2_{b2}O_{2+z}

In Chemical Formula 1-1, M1 may include Co, Mn and/or Al. M2 may include the above-described auxiliary element. In Chemical Formula 1-1, x may be in a range of 0.9 to 1.2, a may be in a range of 0.6 to 0.99, b1+b2 may be in a range of 0.01 to 0.4, and z may be in a range of -0.5 to 0.1.

The cathode active material may further include a coating element or a doping element. For example, elements substantially identical to or similar to the above-described auxiliary elements can be used as the coating element or the doping element. For example, one of the above-described elements alone or two or more thereof in combination can be used as the coating element or the doping element.

The coating element or doping element may be present on the surface of the lithium-nickel metal oxide particle or penetrate through the surface of the lithium-nickel metal composite oxide particle to be included in a bonding structure represented by Chemical Formula 1 or Chemical Formula 1-1.

The cathode active material may include a nickel-cobalt-manganese (NCM)-based lithium oxide. In this case, an NCM-based lithium oxide having an increased nickel content may be used.

Ni may be provided as a transition metal associated with the output and capacity of a lithium secondary battery. Therefore, as described above, employing a high-Ni composition in the cathode active material may provide a high-capacity cathode and a high-capacity lithium secondary battery.

However, as the content of Ni increases, long-term storage stability and cycle life stability of the cathode or the secondary battery may deteriorate, and side reactions with the electrolyte may also increase. However, in some embodiments, including Co can maintain electrical conductivity while Mn can improve cycle life stability and capacity retention.

The content of Ni (such as the molar fraction of nickel in a total number of moles of nickel, cobalt, and manganese) in the NCM-based lithium oxide may be 0.6 or more, 0.7 or more, or 0.8 or more. In some embodiments, the content of Ni may range from 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (such as LiFePO₄).

In some embodiments, the cathode active material may include a Mn-rich based active material having a chemical structure or crystal structure represented by Chemical Formula 2, an Li rich layered oxide (LLO)/over lithiated oxide (OLO) based active material, and a Co-less based active material.

Chemical Formula 2 p[Li₂MnO₃] · (1-p) [Li_{q}JO₂]

In Chemical Formula 2, 0 < p < 1, 0.9 ≤ q ≤ 1.2, and J may include at least one element selected from Mn, Ni, Co, Fe, Cr, V, Cu, Zn, Ti, Al, Mg, and B.

A separator may be interposed between the anode and the cathode. The separator may prevent an electrical short circuit between the anode and the cathode and allow ions to flow therethrough. According to some embodiments, a thickness of the separator may range from 10 µm to 20 µm, but the embodiments of the present disclosure are not limited thereto.

For example, the separator may include a porous polymer film or a porous nonwoven fabric. The porous polymer film may include polyolefin-based polymers such as ethylene polymers, propylene polymers, ethylene/butene copolymers, ethylene/hexene copolymers, and ethylene/methacrylate copolymers. The porous nonwoven fabric may include high melting point glass fibers, polyethylene terephthalate fibers, etc. The separator may also include ceramic materials. For example, inorganic particles may be coated on the polymer film or dispersed in the polymer film to improve heat resistance.

The separator may have a single-layer or multi-layered structure including the polymer film and/or porous nonwoven fabric described above.

The lithium secondary battery as described above has excellent rapid charging characteristics, high capacity characteristics, life performance, and resistance characteristics, and thus may be greatly useful as a power source for electric vehicles (EVs).

### Embodiments and Comparative Examples

### 1. Anode and secondary battery manufacturing

### 1) Anode preparation

Two types of artificial graphite (artificial graphite 1 and 2), natural graphite, silicon oxide (SiOx, 0<x<2) as a silicon-based active material, carboxymethylcellulose (CMC) and styrene-butadiene rubber (SBR) as binders, single-walled carbon nanotubes (SWCNTs) as conductive materials, and N-methyl-2-pyrrolidone (NMP) as a conductive material dispersant (CNT dispersant) were prepared.

Moreover, the ratio of peak intensity of the (004) plane to that of the (110) plane (I₍₀₀₄₎/I₍₁₁₀₎) derived from the X-ray diffraction (XRD) analysis for artificial graphite 1, artificial graphite 2, and natural graphite was 3.15, 2.73, and 1.81, respectively. Herein, the peak intensity of each of the (004) plane and the (110) plane was calculated as the integral area value of each peak of the (004) plane and the (110) plane in the X-ray diffraction (XRD) pattern obtained by the XRD analysis using CuKα rays, and the XRD analysis conditions were set as follows.
- 2θ: 10°~ 80°
- Step size: 0.006565 °/step
- Time per step: 100 sec
- Scan rate = 0.0673 °/sec

As shown in Table 1 below, the compositions of anode mixture layers were differently controlled to prepare anodes for lithium secondary batteries according to Embodiments and Comparative Examples. Specifically, in Embodiments 1 to 3 and Comparative Examples 1, 2 and 4, first and second anode slurries having compositions as shown in Table 1 below on a solid basis were prepared. Thereafter, the first and second anode slurries were sequentially coated on one surface of an anode current collector (Cu-foil), dried and rolled to form first and second anode mixture layers on the current collector, which was then subjected to a rolling process to prepare final anodes. Herein, the LW ratio of the first and second anode mixture layers was applied as 5:5.

In addition, in Comparative Example 3, an anode slurry having a composition as shown in Table 1 below was prepared on a solid basis, and then coated on one surface of an anode current collector (Cu-foil), dried and rolled to form an anode mixture layer with a single-layer structure on the current collector, and then subjected to a rolling process to prepare a final anode.

The total loading weight (LW) of the anode mixture layer and the rolled density of the anode are as shown in Table 1 below.

**Table 1**

| | Ano de Coa tin g | Anode mixture layer composition(wt%) | | | | | | | | Anode characte ristics | |
|---|---|---|---|---|---|---|---|---|---|---|---|
| | | artificial graphite | | Natu ral grap hite | Si Ox | CMC | SBR | SW CNT | CNT dis per san t | LW( mg/ cm² ) | Rol lin g den sit y(g /cc ) |
| | | 1 | 2 | | | | | | | | |
| Em b 1 | Up | 86.05 | 0 | | 12 | 1.2 | 0.6 | 0.0 6 | 0.0 9 | 11. 00 | 1.6 3 |
| | Low | 0 | 96.4 | | 0 | 1.2 | 2.4 | 0 | 0 | | |
| | Tot | 43.02 5 | 48.2 0 | | 6. 00 | 1.2 0 | 1.5 0 | 1.0 3 | 0.0 45 | | |
| Em b 2 | Up | 86.05 | | | 12 | 1.2 | 0.6 | 0.0 6 | 0.0 9 | 11. 00 | 1.6 3 |
| | Low | 96.4 | | | 0 | 1.2 | 2.4 | 0 | 0 | | |
| | Tot | 91.22 5 | | | 6. 0 | 1.2 | 1.5 | 0.0 3 | 0.0 45 | | |
| Em b 3 | Up | 86.05 | | 0 | 12 | 1.2 | 0.6 | 0.0 6 | 0.0 9 | 11. 00 | 1.6 3 |
| | Low | 38.56 | | 57.8 4 | 0 | 1.2 | 2.4 | 0 | 0 | | |
| | Tot | 62.30 5 | | 28.9 2 | 6. 0 | 1.2 | 1.5 | 0.0 3 | 0.0 45 | | |
| CE 1 | Up | | 86.0 5 | 0 | 12 | 1.2 | 0.6 | 0.0 6 | 0.0 9 | 11. 00 | 1.6 3 |
| | Low | | 0 | 96.4 | 0 | 1.2 | 2.4 | 0 | 0 | | |
| | Tot | | 43.0 25 | 48.2 | 6. 0 | 1.2 | 1.5 | 0.0 3 | 0.0 45 | | |
| CE 2 | Up | | 88.0 25 | | 10 | 1.2 | 0.6 | 0.0 7 | 0.1 05 | 11. 00 | 1.6 3 |
| | Low | | 96.4 | | 0 | 1.2 | 2.4 | 0 | 0 | | |
| | Tot | | 92.2 125 | | 5. 0 | 1.2 | 1.5 | 0.0 35 | 0.0 525 | | |
| CE 3 | Sin gle lay er | | | 89.1 | 8. 0 | 1.2 | 1.5 | 0.0 8 | 0.1 2 | 10. 60 | 1.6 4 |
| CE 4 | Up | | 88.0 25 | | 10 | 1.2 | 0.6 | .07 | 0.1 05 | 11. 00 | 1.6 3 |
| | Low | 35.9 | | 60.5 | 0 | 1.2 | 2.4 | 0 | 0 | | |
| | Tot | 17.95 | 44.0 125 | 30.2 5 | 5. 0 | 1.2 | 1.5 | 0.0 35 | 0.0 525 | | |

| | | | | | | | | | | | |
|---|---|---|---|---|---|---|---|---|---|---|---|
| * Up: Upper layer (Second layer), Low: Lower layer (First layer), Tot: Total, CE: Comparative Example, Emb: Embodiment | | | | | | | | | | | |

### 2) Secondary battery manufacturing

A cathode slurry including 98.25 wt% of an NCM-based cathode active material (Li[Ni_{0.6}Co_{0.1}Mn_{0.3}]O₂) , 0.90 wt% of a binder (polyvinylidene fluoride; PVdF), 0.70 wt% of a conductive material (multi-walled carbon nanotubes; MWCNTs), and 0.15 wt% of a conductive material dispersant (N-methyl-2-pyrrolidone; NMP) was prepared based on the solid content. Thereafter, the cathode slurry was uniformly applied to one surface of a cathode current collector (Al-foil), dried, and rolled to form a cathode mixture layer on one surface of the cathode current collector, thereby preparing a cathode for a lithium secondary battery.

The secondary battery cell assembled by inserting a polyethylene (PE) separator between the cathode and the anode prepared as described above was housed in a pouch for a secondary battery. Thereafter, an electrolyte prepared by dissolving 1 M of LiPF₆ in a solvent obtained by mixing ethylene carbonate (EC) and diethyl carbonate (DEC) was injected into the pouch for a lithium secondary battery, which was then sealed to manufacture a pouch-type lithium secondary battery. The manufactured pouch-type lithium secondary batteries were used as secondary battery samples for the Embodiments and Comparative Examples.

### 2. Measurement of peak intensity ratio and evaluation of battery performance

### 1) Peak intensity ratio measurement

An X-ray diffraction (XRD) analysis was performed on the anode prepared as described above, a peak intensity ratio according to Equation 1 below was calculated, and the results are shown in Table 2.

[Equation 1] $Peak intensity ratio = {I}_{2 H \left(100\right)} / {I}_{3 R \left(101\right)}$

In Equation 1, I_{2H(100)} is a peak intensity value of the 2H(100) plane in an X-ray diffraction pattern obtained by an XRD analysis, and I_{3R(101)} is a peak intensity value of the 3R(101) plane in the X-ray diffraction pattern obtained by the XRD analysis.

Specifically, in Embodiments 1 to 3 and Comparative Examples 1, 2 and 4, the peak intensity ratio was measured for a powder form of an anode mixture layer formed by peeling off the anode mixture layers (the first anode mixture layer and the second anode mixture layer) from the anode current collector of the dual-layer structure and then pulverizing them (i.e., measuring in a mixed state of the first anode mixture layer and the second anode mixture layer). Herein, after being pulverized by a pulverizing stick, the anode mixture layer was obtained in a powder form having a diameter of 10 to 20 µm through particle separation, wherein the diameter was measured as the length of the longest axis of the powder form of the anode mixture layer. Thereafter, using an XRD device (Empyrean manufactured by PANalytical), the XRD analysis was performed on the powder form of the anode mixture layer with CuKα rays as a target line. Herein, the conditions for the analysis were set as follows.
- 2θ: 10°~ 80°
- Step size: 0.006565°/step
- Time per step: 100 sec
- Scan rate = 0.0673°/sec

In addition, in the case of Comparative Example 3, which is an anode having a single-layer structure, after peeling off the anode mixture layer from the anode current collector, the XRD analysis was performed according to the same method as described above.

### 2) Rapid life performance

The secondary battery sample was charged from SOC 10 to 80 (4.4 V cut-off) for 20 minutes and discharged to SOC 10 (1.0 C CC, 2.5 V cut-off) at 25°C, and the charging/discharging process was repeated 300 times. The results of calculating a discharge capacity retention rate in a % at a specific cycle number relative to an initial discharge capacity are shown in FIG 2. In addition, the results of measuring a capacity retention rate when the number of cycles is 150 or 300 are shown in Table 2.

### 3) 45°C life performance

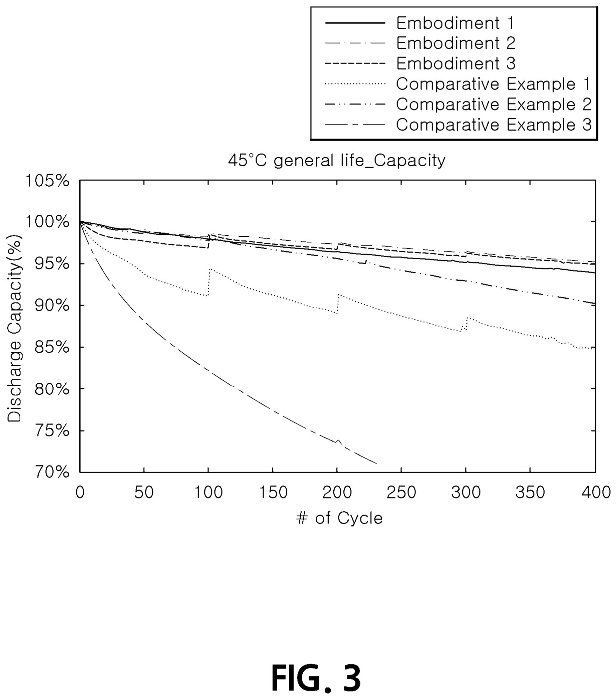

The secondary battery samples were charged at 0.33 C within an SOC range of 4% to 98% and discharged at 0.5 C in repeated cycles at 45°C, and the result of calculating the discharge capacity retention rate in a % at specific numbers of cycles relative to the initial discharge capacity is shown in FIG 3. In addition, the result of measuring the discharge capacity retention rates when the number of cycles is 200, 300, and 400 are shown in Table 2.

**Table 2**

| | Peak Intensity Ratio | Rapid life performance | | 45°C life performance | | |
|---|---|---|---|---|---|---|
| | | 150 cyc | 300 cyc | 200 cyc | 300 cyc | 400 cyc |
| Embodiment 1 | 2.5 | 95.7% | 92.6% | 96.7% | 95.8% | 94.9% |
| Embodiment 2 | 3.1 | 96.0% | 93.9% | 97.3% | 96.3% | 95.2% |
| Embodiment 3 | 1.9 | 95.6% | 92.1% | 96.4% | 95.1% | 93.9% |
| Comparative Example 1 | 1.5 | 94.2% | 85.6% | 89.1% | 86.9% | 84.7% |
| Comparative Example 2 | 4.0 | 94.4% | 85.7% | 94.1% | 91.2% | 87.9% |
| Comparative Example 3 | 0.7 | 84.5% | - | 73.6% | - | - |
| Comparative Example 4 | 1.7 | 95.1% | 89.8% | 94.8% | 91.6% | 89.8% |

Referring to Tables 1 and 2 and FIGS. 2 and 3, in Comparative Examples 1, 3, and 4, the peak intensity ratio of the anode mixture layer is less than 1.85, and both rapid life performance and 45°C life performance of the battery are insufficient. In addition, it can be seen that in Comparative Example 2, the peak intensity ratio of the anode mixture layer exceeds 3.5, and both rapid life performance and 45°C life performance of the battery are insufficient.

On the other hand, in Embodiments 1 to 3, it can be seen that the peak intensity ratio of the anode mixture layer is from 1.85 to 3.5 and both rapid life performance and 45°C life performance of the battery are relatively excellent.

Only certain embodiments are described. Variations, improvements and enhancements of the disclosed embodiments and other embodiments may be made based on the present disclosure. Furthermore, the embodiments may be combined to form additional embodiments.

The present disclosure also relates to the following aspects.
(Aspect 1) An anode for a lithium secondary battery comprising: an anode current collector; and an anode mixture layer on at least one surface of the anode current collector, wherein the anode mixture layer comprises a carbon-based active material, and the anode mixture layer has a peak intensity ratio of 1.85 to 3.5 according to Equation 1, [Equation 1] $Peak intensity ratio = I 2 H \left(100\right) / I 3 R \left(101\right)$ wherein in Equation 1, I2H(100) is a peak intensity value of the 2H(100) plane in an X-ray diffraction pattern obtained by an XRD analysis, and I3R(101) is a peak intensity value of the 3R(101) plane in the X-ray diffraction pattern obtained by the XRD analysis.
(Aspect 2) The anode for a lithium secondary battery of aspect 1, wherein the anode mixture layer comprises: a first anode mixture layer on an anode current collector; and a second anode mixture layer on the first anode mixture layer, wherein the first anode mixture layer comprises a first carbon-based active material, and the second anode mixture layer comprises a second carbon-based active material.
(Aspect 3) The anode for a lithium secondary battery of aspect 2, wherein the first carbon-based active material comprises at least one of artificial graphite and natural graphite.
(Aspect 4) The anode for a lithium secondary battery of aspect 2 or 3, wherein a content of natural graphite in the first anode mixture layer is less than 60 wt% based on the total weight of the first anode mixture layer.
(Aspect 5) The anode for a lithium secondary battery any one of aspects 2 to 4, wherein the second carbon-based active material comprises artificial graphite.
(Aspect 6) The anode for a lithium secondary battery any one of aspects 2 to 5, wherein the weight% of the first carbon-based active material comprised in the first anode mixture layer based on the total weight of the first anode mixture layer is equal to or greater than the weight% of the second carbon-based active material comprised in the second anode mixture layer based on the total weight of the second anode mixture layer.
(Aspect 7) The anode for a lithium secondary battery of aspect 6, wherein the content of the first carbon-based active material in the first anode mixture layer is 94 to 99 wt%.
(Aspect 8) The anode for a lithium secondary battery of aspect 6 or 7, wherein the content of the second carbon-based active material comprised in the second anode mixture layer is 82 to 97 wt%.
(Aspect 9) The anode for a lithium secondary battery any one of aspects 2 to 8 wherein the second anode mixture layer further comprises a silicon-based active material.
(Aspect 10) The anode for a lithium secondary battery any one of aspects 2 to 9 wherein the first anode mixture layer and the second anode mixture layer each further comprise a binder, wherein the weight% of the binder comprised in the first anode mixture layer based on the total weight of the first anode mixture layer is equal to or greater than the weight% of the binder comprised in the second anode mixture layer based on the total weight of the second anode mixture layer.
(Aspect 11) The anode for a lithium secondary battery any one of aspects 2 to 10, wherein the first anode mixture layer does not comprise a conductive material and the second anode mixture layer further comprises a conductive material.
(Aspect 12) The anode for a lithium secondary battery any one of aspects 1 to 11, the rolled density of the anode for a lithium secondary battery is less than 1.64 g/cc.
(Aspect 13) A lithium secondary battery comprising the anode any one of aspects 1 to 12.
(Aspect 14) An anode for a lithium secondary battery comprising: an anode current collector; a first anode mixture layer disposed on the anode current collector and comprising a first carbon-based active material; a second anode mixture layer disposed on the first anode mixture layer and comprising a second carbon-based active material;
wherein the second anode mixture layer comprises a conductive material and the first anode mixture layer does not comprise a conductive material.

### DESCRIPTION OF REFERENCE NUMERALS

10: Anode Current Collector
20: Anode Mixture Layer
21: First Anode Mixture Layer
22: Second Anode Mixture Layer
100: Anode for Lithium Secondary Battery

## Claims

1. An anode for a lithium secondary battery comprising:
an anode current collector; and
an anode mixture layer on at least one surface of the anode current collector,
wherein the anode mixture layer comprises a carbon-based active material, and the anode mixture layer has a peak intensity ratio of 1.85 to 3.5 according to Equation 1, [Equation 1] $Peak intensity ratio = I 2 H \left(100\right) / I 3 R \left(101\right)$
wherein in Equation 1, I2H(100) is a peak intensity value of the 2H(100) plane in an X-ray diffraction pattern obtained by an XRD analysis, and I3R(101) is a peak intensity value of the 3R(101) plane in the X-ray diffraction pattern obtained by the XRD analysis.

2. The anode for a lithium secondary battery of claim 1, wherein the anode mixture layer comprises:
a first anode mixture layer on an anode current collector; and
a second anode mixture layer on the first anode mixture layer,
wherein the first anode mixture layer comprises a first carbon-based active material, and the second anode mixture layer comprises a second carbon-based active material.

3. The anode for a lithium secondary battery of claim 2, wherein the first carbon-based active material comprises at least one of artificial graphite and natural graphite.

4. The anode for a lithium secondary battery of claim 2 or 3, wherein a content of natural graphite in the first anode mixture layer is less than 60 wt% based on the total weight of the first anode mixture layer.

5. The anode for a lithium secondary battery any one of claims 2 to 4, wherein the second carbon-based active material comprises artificial graphite.

6. The anode for a lithium secondary battery any one of claims 2 to 5, wherein the weight% of the first carbon-based active material comprised in the first anode mixture layer based on the total weight of the first anode mixture layer is equal to or greater than the weight% of the second carbon-based active material comprised in the second anode mixture layer based on the total weight of the second anode mixture layer.

7. The anode for a lithium secondary battery of claim 6, wherein the content of the first carbon-based active material in the first anode mixture layer is 94 to 99 wt%.

8. The anode for a lithium secondary battery of claim 6 or 7, wherein the content of the second carbon-based active material comprised in the second anode mixture layer is 82 to 97 wt%.

9. The anode for a lithium secondary battery any one of claims 2, to 8 wherein the second anode mixture layer further comprises a silicon-based active material.

10. The anode for a lithium secondary battery any one of claims 2, to 9 wherein the first anode mixture layer and the second anode mixture layer each further comprise a binder, wherein the weight% of the binder comprised in the first anode mixture layer based on the total weight of the first anode mixture layer is equal to or greater than the weight% of the binder comprised in the second anode mixture layer based on the total weight of the second anode mixture layer.

11. The anode for a lithium secondary battery any one of claims 2 to 10, wherein the first anode mixture layer does not comprise a conductive material and the second anode mixture layer further comprises a conductive material.

12. The anode for a lithium secondary battery any one of claims 1 to 11, the rolled density of the anode for a lithium secondary battery is less than 1.64 g/cc.

13. A lithium secondary battery comprising the anode any one of claims 1 to 12.

14. An anode for a lithium secondary battery comprising:
an anode current collector;
a first anode mixture layer disposed on the anode current collector and comprising a first carbon-based active material;
a second anode mixture layer disposed on the first anode mixture layer and comprising a second carbon-based active material;
wherein the second anode mixture layer comprises a conductive material and the first anode mixture layer does not comprise a conductive material.
